# EUROPEAN PATENT APPLICATION

(11) **EP 4 817 904 A1**
(43) Date of publication of application: **07.10.2026**
(21) Application number: 24899376.8
(22) Date of filing: 03.09.2024
(51) Int. Cl.: B60H 1/00, B60N 3/10

(54) **TEMPERATURE CONTROL METHOD AND APPARATUS, AND VEHICLE**

(30) Priority: 08.12.2023 CN 202311692546
(71) Applicant: Yinwang Intelligent Technologies Co., Ltd., Shenzhen, Guangdong 518110 (CN)
(72) Inventor: XU, Hao, Shenzhen, Guangdong 518129 (CN); ZHU, Kunliang, Shenzhen, Guangdong 518129 (CN); ZHANG, Jieming, Shenzhen, Guangdong 518129 (CN); LIU, Dan, Shenzhen, Guangdong 518129 (CN); SHI, Hao, Shenzhen, Guangdong 518129 (CN); ZHU, Xin, Shenzhen, Guangdong 518129 (CN)
(74) Representative: Pfenning, Meinig & Partner mbB
(86) International application number: PCT/CN2024/116608
(87) International publication number: WO 2025/118730

(57) **Abstract**

This application provides a temperature control method and apparatus, and a vehicle, which are applied to the field of intelligent driving. The method includes: obtaining a working status of a first apparatus in a vehicle, where the working status includes a cooling state and a heating state; obtaining a temperature inside the vehicle; and when the temperature inside the vehicle is greater than a first temperature threshold and the working status of the first apparatus is the cooling state, running a second apparatus in the vehicle to reduce the temperature inside the vehicle; or when the temperature inside the vehicle is less than a second temperature threshold and the working status of the first apparatus is the heating state, running the second apparatus in the vehicle to increase the temperature inside the vehicle. In this application, working efficiency of an automotive refrigerator can be improved at low costs.

## Description

This application claims priority to Chinese Patent Application No. 202311692546.3, filed with the China National Intellectual Property Administration on December 8, 2023 and entitled "TEMPERATURE CONTROL METHOD AND APPARATUS, AND VEHICLE", which is incorporated herein by reference in its entirety.

### TECHNICAL FIELD

This application relates to the field of intelligent driving, and in particular, to a temperature control method and apparatus, and a vehicle.

### BACKGROUND

With rapid development of the transportation industry, automotive refrigerators are mounted in more vehicles, to meet requirements of users for refrigerating and preserving food and improve comfort and safety of outdoor travel of the users. Currently, there are mainly two types of automotive refrigerators: automotive compressor refrigerators, which have high cooling efficiency but a low response speed, and are heavy in weight and high in costs; and automotive semiconductor refrigerators, which have a high response speed, and are light in weight and low in costs, but have low cooling efficiency.

Therefore, how to optimize temperature control and implement efficient working of an automotive refrigerator at low costs becomes an urgent technical problem to be resolved.

### SUMMARY

Embodiments of this application provide a temperature control method and apparatus, and a vehicle, to implement efficient working of an automotive refrigerator at low costs.

To achieve the foregoing objective, embodiments of this application provide the following technical solutions.

According to a first aspect, an embodiment of this application provides a temperature control method. The method includes: obtaining a working status of a first apparatus in a vehicle, where the working status includes a cooling state and a heating state; obtaining a temperature inside the vehicle; and when the temperature inside the vehicle is greater than a first temperature threshold and the working status of the first apparatus is the cooling state, running a second apparatus in the vehicle to reduce the temperature inside the vehicle; or when the temperature inside the vehicle is less than a second temperature threshold and the working status of the first apparatus is the heating state, running the second apparatus in the vehicle to increase the temperature inside the vehicle.

In this case, based on the working status of the first apparatus, when the temperature inside the vehicle affects efficiency of the first apparatus in the working status, the temperature inside the vehicle is regulated by using the second apparatus, so that the first apparatus works efficiently. The first apparatus and the second apparatus are coordinated to control the temperature inside the vehicle, allowing the automotive refrigerator to work efficiently at low costs, ensuring normal use of the automotive refrigerator at different ambient temperatures, and expanding usage scenarios of the automotive refrigerator.

According to the first aspect, the first apparatus is an automotive refrigerator, and the second apparatus is an automotive air conditioner.

In some examples, the first apparatus is an automotive semiconductor refrigerator that provides a cooling function or a temperature holding function in the vehicle.

According to any one of the first aspect or the foregoing implementations of the first aspect, the working status of the first apparatus is obtained by using various sensors mounted on the vehicle.

According to any one of the first aspect or the foregoing implementations of the first aspect, the working status of the first apparatus is obtained from various subsystems of the vehicle.

According to any one of the first aspect or the foregoing implementations of the first aspect, before obtaining the working status of the first apparatus in the vehicle, the method further includes: receiving a first signal sent by a remote device, where the first signal indicates to start the first apparatus; and starting the first apparatus based on a working status indicated by the first signal; or obtaining a working status used during previous running of the first apparatus; and running the first apparatus based on the working status used during the previous running.

In some examples, in response to an operation of starting the first apparatus in the vehicle by a user, a working status used during previous running of the first apparatus, preset data, or data set by the user is obtained, and the first apparatus is started and run based on the working status used during the previous running of the first apparatus, the preset data, or the data set by the user.

In some examples, the temperature inside the vehicle is obtained in real time by using a temperature sensor mounted on the vehicle.

In some other examples, the temperature inside the vehicle is obtained from various subsystems of the vehicle.

In this case, the temperature inside the vehicle of the vehicle is obtained in real time based on a real-time working status of the first apparatus, so that whether the temperature inside the vehicle affects the working efficiency of the first apparatus is accurately determined subsequently.

In some examples, the first temperature threshold is a predetermined maximum temperature threshold at which the first apparatus is run in the cooling state without reducing cooling efficiency.

In some other examples, the second temperature threshold is a predetermined minimum temperature threshold at which the first apparatus is run in the heating state without reducing heating efficiency.

In this case, corresponding temperature thresholds are preset for different working statuses of the first apparatus, so that whether the temperature inside the vehicle affects a current working status of the first apparatus is quickly determined, to accurately control the temperature subsequently. Therefore, the first apparatus continuously works at high working efficiency, and a refrigeration or temperature holding effect is improved.

According to any one of the first aspect or the foregoing implementations of the first aspect, running the second apparatus in the vehicle to reduce the temperature inside the vehicle includes: when the second apparatus is not started, starting the second apparatus, and running the second apparatus based on a first temperature setpoint, to reduce the temperature inside the vehicle.

According to any one of the first aspect or the foregoing implementations of the first aspect, running the second apparatus in the vehicle to reduce the temperature inside the vehicle includes: when the second apparatus has been started, running the second apparatus based on a second temperature setpoint, to reduce the temperature inside the vehicle.

In some examples, both the first temperature setpoint and the second temperature setpoint are less than or equal to the first temperature threshold, and the second temperature setpoint may be the same as or different from the first temperature setpoint.

In this case, when the working status of the first apparatus is the cooling state and the temperature inside the vehicle is greater than the first temperature threshold, the second apparatus is run to reduce the temperature inside the vehicle, so that the temperature inside the vehicle is reduced to a temperature present when working efficiency of the first apparatus in the cooling state is not affected. Even if the first apparatus is in a high-temperature environment, an ambient temperature may be reduced by using the second apparatus, to ensure efficient running of the first apparatus and meet diversified requirements of the user.

According to any one of the first aspect or the foregoing implementations of the first aspect, running the second apparatus in the vehicle to increase the temperature inside the vehicle includes: when the second apparatus is not started, starting the second apparatus, and running the second apparatus based on a third temperature setpoint, to increase the temperature inside the vehicle.

According to any one of the first aspect or the foregoing implementations of the first aspect, when the second apparatus has been started, the second apparatus is run based on a fourth temperature setpoint, to increase the temperature inside the vehicle.

In some examples, both the third temperature setpoint and the fourth temperature setpoint are greater than or equal to the second temperature threshold, and the third temperature setpoint may be the same as or different from the fourth temperature setpoint.

In this case, when the working status of the first apparatus is the heating state and the temperature inside the vehicle is less than the second temperature threshold, the second apparatus is run to increase the temperature inside the vehicle, so that the temperature inside the vehicle is increased to a temperature present when working efficiency of the first apparatus in the heating state is not affected. Even if the first apparatus is in a low-temperature environment, an ambient temperature may be increased by using the second apparatus, to ensure efficient running of the first apparatus and meet diversified requirements of the user.

In a possible implementation, when the temperature inside the vehicle is greater than the first temperature threshold or the temperature inside the vehicle is less than the second temperature threshold, the method further includes: prompting, in a preset manner, a user to adjust the temperature inside the vehicle by using the second apparatus.

In this case, when the temperature inside the vehicle is greater than the first temperature threshold or the temperature inside the vehicle is less than the second temperature threshold, the user may be prompted, in a plurality of manners, to improve the temperature inside the vehicle, and the user may customize settings of the second apparatus. This helps provide a comfortable riding environment, and improve riding comfort and safety.

According to any one of the first aspect or the foregoing implementations of the first aspect, the method further includes: stopping the second apparatus after preset duration.

According to any one of the first aspect or the foregoing implementations of the first aspect, after running the second apparatus in the vehicle to reduce the temperature inside the vehicle, the method further includes: when the temperature inside the vehicle is less than or equal to a third temperature threshold, automatically stopping the second apparatus, where the third temperature threshold is less than or equal to the first temperature threshold.

In some examples, the third temperature threshold is less than or equal to the first temperature threshold.

In this way, after the second apparatus is run in the cooling state, the temperature inside the vehicle gradually decreases. When the temperature inside the vehicle is less than or equal to the third temperature threshold, the temperature inside the vehicle may meet a requirement of efficient cooling of the first apparatus, and the second apparatus is automatically stopped, to prevent the second apparatus from consuming excessive power due to long-time running, and save power and resources. In addition, when the third temperature threshold is less than the first temperature threshold, there is a difference between the third temperature threshold and the first temperature threshold, so that the second apparatus can be prevented from being frequently started, a use interval of the second apparatus can be prolonged, power consumption can be reduced, and more power can be saved.

According to any one of the first aspect or the foregoing implementations of the first aspect, after running the second apparatus in the vehicle to increase the temperature inside the vehicle, the method further includes: when the temperature inside the vehicle is greater than or equal to a fourth temperature threshold, automatically stopping the second apparatus, where the fourth temperature threshold is greater than or equal to the second temperature threshold.

In some examples, the fourth temperature threshold is greater than or equal to the second temperature threshold.

In this way, after the second apparatus is run in the heating state, the temperature inside the vehicle gradually increases. When the temperature inside the vehicle is greater than or equal to the fourth temperature threshold, the temperature inside the vehicle may meet a requirement of efficient heating of the first apparatus, and the second apparatus is automatically stopped, to prevent the second apparatus from consuming excessive power due to long-time running, and save power and resources. In addition, when the fourth temperature threshold is greater than the second temperature threshold, there is a difference between the fourth temperature threshold and the second temperature threshold, so that the second apparatus can be prevented from being frequently started, a use interval of the second apparatus can be prolonged, power consumption can be reduced, and more power can be saved.

According to any one of the first aspect or the foregoing implementations of the first aspect, after running the second apparatus in the vehicle to reduce the temperature inside the vehicle, the method further includes: when the temperature inside the vehicle is less than or equal to the first temperature threshold, obtaining a temperature outside the vehicle; and if the temperature outside the vehicle is less than or equal to the first temperature threshold, setting a status of the second apparatus to a fresh air mode.

According to any one of the first aspect or the foregoing implementations of the first aspect, after running the second apparatus in the vehicle to increase the temperature inside the vehicle, the method further includes: when the temperature inside the vehicle is greater than or equal to the second temperature threshold, obtaining a temperature outside the vehicle; and if the temperature outside the vehicle is greater than or equal to the second temperature threshold, setting t a status of the second apparatus to a fresh air mode.

In some examples, when the temperature inside the vehicle reduces to the first temperature threshold or is less than the first temperature threshold, if the temperature outside the vehicle also does not exceed the first temperature threshold, a cooling function of the second apparatus is disabled, and the fresh air mode is enabled. Alternatively, when the temperature inside the vehicle increases to the second temperature threshold or is greater than the second temperature threshold, if the temperature outside the vehicle is also not less than the second temperature threshold, a heating function of the second apparatus is disabled, and the fresh air mode is enabled. In this way, the temperature inside the vehicle can be maintained, efficient running of the first apparatus can be ensured, and fresh air can be drawn into the vehicle. This helps improve user comfort and save power.

According to any one of the first aspect or the foregoing implementations of the first aspect, the method further includes: when a state of charge of the vehicle is less than a preset state-of-charge threshold, stopping the first apparatus and/or the second apparatus.

In this way, the first apparatus and/or the second apparatus is prevented from consuming excessive power due to long-time running and making the vehicle unable to normally travel.

According to a second aspect, an embodiment of this application provides a temperature control apparatus. The temperature control apparatus includes a processor and a memory. The memory is coupled to the processor, and the memory is configured to store computer-readable instructions. When the processor reads the computer-readable instructions from the memory, the data collection apparatus is enabled to perform the method according to the first aspect and any one of the implementations of the first aspect.

According to a third aspect, an embodiment of this application provides a transportation means. The transportation means includes the temperature control apparatus provided in the second aspect.

Optionally, the transportation means includes a vehicle, for example, an electric vehicle, a car, a truck, a motorcycle, a bus, a lawn mower, a recreational vehicle, a playground vehicle, a construction device, a tram, a golf cart, a train, a handcart, and the like. This is not specially limited in embodiments of this application.

For technical effects corresponding to the second aspect, the third aspect, and any one of the implementations of the second aspect and the third aspect, refer to the technical effects corresponding to the first aspect and any one of the implementations of the first aspect. Details are not described herein again.

### BRIEF DESCRIPTION OF DRAWINGS

FIG. 1 is a diagram of an architecture of a temperature control system according to an embodiment of this application;
FIG. 2 is a diagram of a hardware structure of a temperature control apparatus according to an embodiment of this application;
FIG. 3 is a diagram of a structure of a vehicle according to an embodiment of this application;
FIG. 4 is a schematic flowchart 1 of a temperature control method according to an embodiment of this application;
FIG. 5 is a schematic flowchart 2 of a temperature control method according to an embodiment of this application;
FIG. 6 is a schematic flowchart 3 of a temperature control method according to an embodiment of this application;
FIG. 7 is a diagram of a structure of a temperature control apparatus according to an embodiment of this application; and
FIG. 8 is a diagram of a structure of a chip system according to an embodiment of this application.

### DESCRIPTION OF EMBODIMENTS

In descriptions of embodiments of this application, unless otherwise specified, "/" means "or". For example, A/B may indicate A or B. In this specification, "and/or" merely describes an association relationship between associated objects, and indicates that three relationships may exist. For example, A and/or B may indicate the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features.

In the descriptions of embodiments of this application, unless otherwise specified, "a plurality of" means two or more. In embodiments of this application, terms such as "example" or "for example" indicate giving an example, an illustration, or a description. Any embodiment or design scheme described as an "example" or "for example" in embodiments of this application shall not be explained as being more preferred or having more advantages than another embodiment or design scheme. To be precise, use of the terms such as "example" or "for example" is intended to present a related concept in a specific manner.

In some examples, an automotive refrigerator may utilize a compressor to achieve cooling and temperature holding functions. Specifically, according to a compressor cycle principle, a temperature is adjusted by compressing and expanding a refrigerant, and cooling and heating is implemented by changing pressure and the temperature. An automotive compressor refrigerator has high cooling efficiency and is not affected by an environment, but is heavy in weight and high in costs. For example, after the automotive compressor refrigerator continuously works for two hours at any temperature within a range of an ambient temperature from 30°C to 35°C, a temperature inside the automotive compressor refrigerator decreases by an average of 8.5°C.

In some other examples, the automotive refrigerator may alternatively utilize a semiconductor to achieve the cooling and temperature holding functions. Specifically, based on a Peltier (Peltier) effect, the temperature is adjusted through a current in a semiconductor material, and cooling and heating is implemented by changing a current direction. Cooling efficiency of an automotive semiconductor refrigerator is affected by the ambient environment, and a higher ambient temperature indicates poorer cooling efficiency. However, the refrigerator is light in weight and low in costs. For example, after the automotive semiconductor refrigerator continuously works for two hours at an ambient temperature of 30°C, a temperature inside the automotive semiconductor refrigerator decreases by an average of 9.2°C. However, after the automotive semiconductor refrigerator continuously works for two hours at an ambient temperature of 35°C, the temperature inside the automotive semiconductor refrigerator decreases by an average of 5.8°C.

To resolve the foregoing technical problems, an embodiment of this application provides a temperature control method, including: obtaining a working status of a first apparatus in a vehicle, where the working status includes a cooling state and a heating state; obtaining a temperature inside the vehicle; and when the temperature inside the vehicle is greater than a first temperature threshold and the working status of the first apparatus is the cooling state, running a second apparatus in the vehicle to reduce the temperature inside the vehicle; or when the temperature inside the vehicle is less than a second temperature threshold and the working status of the first apparatus is the heating state, running the second apparatus in the vehicle to increase the temperature inside the vehicle. According to the solutions in this embodiment of this application, based on the working status of the first apparatus, when the temperature inside the vehicle affects efficiency of the first apparatus in the working status, the temperature inside the vehicle is regulated by using the second apparatus, so that the first apparatus works efficiently. The method provided in this embodiment of this application can allow an automotive refrigerator to work efficiently at low costs, ensure normal use of the automotive refrigerator at different ambient temperatures, and expand usage scenarios of the automotive refrigerator.

The following describes the technical solutions in embodiments of this application with reference to the accompanying drawings in embodiments of this application. It is clear that the described embodiments are merely a part rather than all of embodiments of this application.

The temperature control method in this embodiment of this application may be applied to various devices that use the automotive refrigerator (which may also be described as the first apparatus) and an automotive air conditioner (which may also be described as the second apparatus). The various devices may include various transportation means such as a new energy vehicle, an electric vehicle, a bus, and a vehicle. A specific form of the device is not specially limited in embodiments of this application.

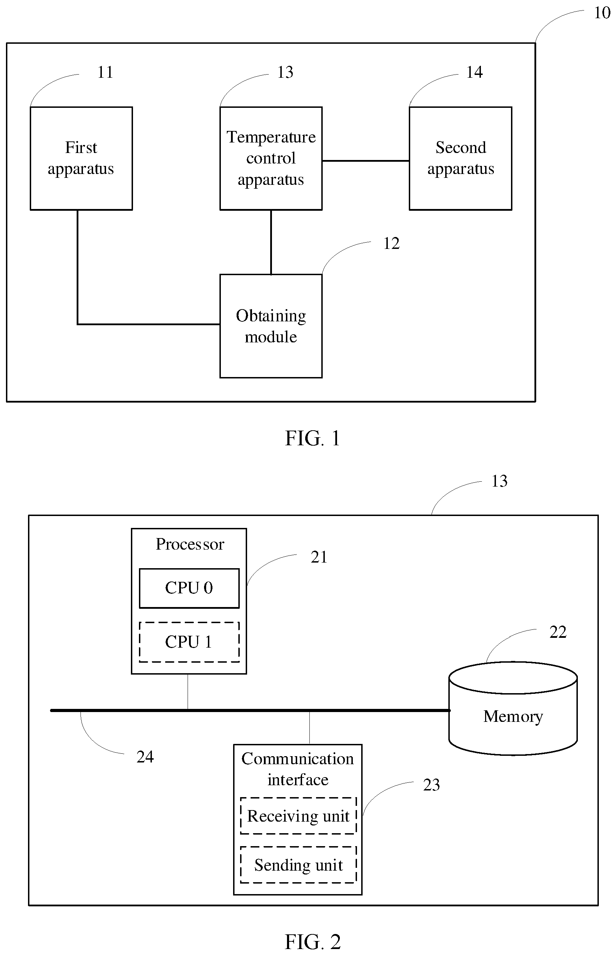

FIG. 1 shows a temperature control system 10 according to an embodiment of this application. As shown in FIG. 1, the temperature control system 10 includes a first apparatus 11, an obtaining module 12, a temperature control apparatus 13, and a second apparatus 14. The first apparatus 11, the obtaining module 12, the temperature control apparatus 13, and the second apparatus 14 are connected and communicate with each other.

The first apparatus 11 is an automotive refrigerator that provides a cooling function or a temperature holding function in a vehicle. The first apparatus 11 is an automotive semiconductor refrigerator. A working status of the first apparatus 11 present during running includes a cooling state and a heating state. For example, when the working status of the first apparatus 11 is the cooling state, the first apparatus 11 is configured to refrigerate food. When the working status of the first apparatus 11 is the heating state, the first apparatus 11 is configured to maintain a temperature of food.

The obtaining module 12 may be configured to obtain the working status of the first apparatus in the vehicle. The obtaining module 12 may be further configured to obtain a temperature inside the vehicle. The obtaining module 12 may be further configured to report the obtained working status of the first apparatus and the obtained temperature inside the vehicle to the temperature control apparatus 13.

The obtaining module 12 includes a vehicle sensor, and the vehicle sensor is usually disposed inside the vehicle. The vehicle sensor may be configured to detect the working status of the first apparatus of the vehicle and the temperature inside the vehicle. The vehicle sensor may be any one of a temperature sensor, a photoelectric speed sensor, a magneto-electric speed sensor, and a Hall speed sensor. This is not limited herein.

It may be understood that the vehicle sensor is disposed in the vehicle, and therefore, when the obtaining module 12 is the vehicle sensor, the obtaining module 12 moves with the vehicle, and the obtaining module 12, the first apparatus 11, and the temperature control apparatus 13 may communicate with each other via a wireless communication network.

It should be understood that the foregoing descriptions of the obtaining module 12 are merely examples for description, and a specific form and an implementation of the obtaining module 12 are not specifically limited in embodiments of this application.

Refer to FIG. 1. The temperature control apparatus 13 shown in FIG. 1 may be configured to: based on the working status of the first apparatus in the vehicle and the temperature inside the vehicle that are received from the obtaining module 12, when the temperature control apparatus 13 determines that the temperature inside the vehicle is greater than a first temperature threshold and the working status of the first apparatus is the cooling state, interact with the second apparatus 14, and control the second apparatus to run, to reduce the temperature inside the vehicle; or when the temperature control apparatus 13 determines that the temperature inside the vehicle is less than a second temperature threshold and the working status of the first apparatus is the heating state, interact with the second apparatus 14, and control the second apparatus 14 to run to increase the temperature inside the vehicle.

In some other examples, the temperature control apparatus 13 obtains the working status of the first apparatus from the first apparatus 11, and the temperature control apparatus 13 obtains the temperature inside the vehicle from the obtaining module 12. A specific implementation in which the temperature control apparatus 13 obtains the working status of the first apparatus and the temperature inside the vehicle is not limited in embodiments of this application.

Optionally, the temperature control apparatus 13 may be a server. For example, the temperature control apparatus 13 may be a server in an intelligent transportation system, for example, a physical server or a cloud server. This is not limited in embodiments of this application.

Optionally, the temperature control apparatus 13 may alternatively be an intelligent driving computing platform. The intelligent driving computing platform is a computing platform that achieves functions such as intelligent driving, decision-making, planning, and control, and is a core component of the entire vehicle. The intelligent driving computing platform interacts with each component in the vehicle, obtains real-time data of each component, and controls working of each component.

The second apparatus 14 is an automotive air conditioner that adjusts the temperature inside the vehicle in the vehicle. The second apparatus 14 interacts with the temperature control apparatus 13, and reduces or increases the temperature inside the vehicle based on control of the temperature control apparatus 13.

It may be understood that, in the foregoing example, the first apparatus 11, the obtaining module 12, the temperature control apparatus 13, and the second apparatus 14 in the temperature control system 10 are independent components, and the first apparatus 11, the obtaining module 12, the temperature control apparatus 13, and the second apparatus 14 exchange data with each other to complete temperature control. During actual application, the obtaining module 12 and the temperature control apparatus 13 may be deployed on a same component. For example, the temperature control apparatus 13 is the intelligent driving computing platform, and the obtaining module 12 is deployed on the temperature control apparatus 13. The temperature control apparatus 13 integrates the obtaining module 12, and interacts with the first apparatus 11 and the second apparatus 14 to implement data collection and temperature control. The temperature control system is not limited in embodiments of this application.

The modules in the foregoing temperature control system are divided according to functional logic, and may alternatively be divided in another manner in practice. In addition, the foregoing modules may have other names. Moreover, each module may be implemented by hardware, may be implemented by software, or may be implemented by a combination of hardware and software. Whether a specific module is implemented by hardware, software, or a combination of software and hardware depends on specific applications and design constraints of the technical solutions. Different modules may be implemented by different pieces of hardware, or a plurality of modules may be implemented by same hardware. This is not specifically limited in embodiments of this application.

FIG. 2 is a diagram of a hardware structure of a temperature control apparatus 13 according to an embodiment of this application. As shown in FIG. 2, the temperature control apparatus 13 includes a processor 21, a memory 22, a communication interface 23, and a bus 24. The processor 21, the memory 22, and the communication interface 23 may be connected through the bus 24. The processor 21 is configured to manage and control an action of the temperature control apparatus 13, and/or is configured to perform a temperature control method described below. The memory 22 is configured to store program code and data of the temperature control apparatus 13. The communication interface 23 is configured to support communication between the temperature control apparatus 13 and another network entity.

The processor 21 (or described as a controller) is a control center of the temperature control apparatus 13, and may implement or execute various example logic blocks, unit modules, and circuits described with reference to content disclosed in this application. The processor or the controller may be a general-purpose central processing unit (central processing unit, CPU), a general-purpose processor, a digital signal processor, an application-specific integrated circuit, a field programmable gate array or another programmable logic device, a transistor logic device, a hardware component, or any combination thereof. The general-purpose processor may be a microprocessor, any conventional processor, or the like. The processor 21 may alternatively be a combination for achieving a computing function, for example, a combination including one or more microprocessors, or a combination of a digital signal processor (digital signal processor, DSP) and a microprocessor.

In an example, the processor 21 may include one or more CPUs, for example, a CPU 0 and a CPU 1 that are shown in FIG. 2.

The memory 22 may be a read-only memory (read-only memory, ROM), another type of static storage device that can store static information and instructions, a random access memory (random access memory, RAM), or another type of dynamic storage device that can store information and instructions, may be a flash memory, a hard disk, or a solid-state disk, or may be an electrically erasable programmable read-only memory (electrically erasable programmable read-only memory, EEPROM), a magnetic disk storage medium or another magnetic storage device, or any other medium that can be used to carry or store expected program code in a form of an instruction structure or a data structure and that is accessible to a computer. However, this is not limited thereto. The memory 22 may further include a combination of the foregoing types of memories.

In a possible implementation, the memory 22 may be independent of the processor 21. The memory 22 may be connected to the processor 21 through the bus 24, and is configured to store data, instructions, or program code. When invoking and executing the instructions or the program code stored in the memory 22, the processor 21 can implement the temperature control method provided in embodiments of this application.

In another possible implementation, the memory 22 may alternatively be integrated with the processor 21.

The communication interface 23 is configured to connect the temperature control apparatus 13 to another device (for example, the first apparatus 11, the obtaining module 12, and the second apparatus 14) via a communication network. The communication network may be a transceiver circuit, an Ethernet, a radio access network (radio access network, RAN), a wireless local area network (wireless local area networks, WLAN), or the like. The communication interface 23 may include a receiving unit configured to receive data and a sending unit configured to send data.

The bus 24 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 2, but this does not mean that there is only one bus or only one type of bus.

It should be noted that the structure shown in FIG. 2 does not constitute a limitation on the temperature control apparatus 13. In addition to components shown in FIG. 2, the temperature control apparatus 13 may include more or fewer components than those shown in the figure, combine some components, or have different component arrangements.

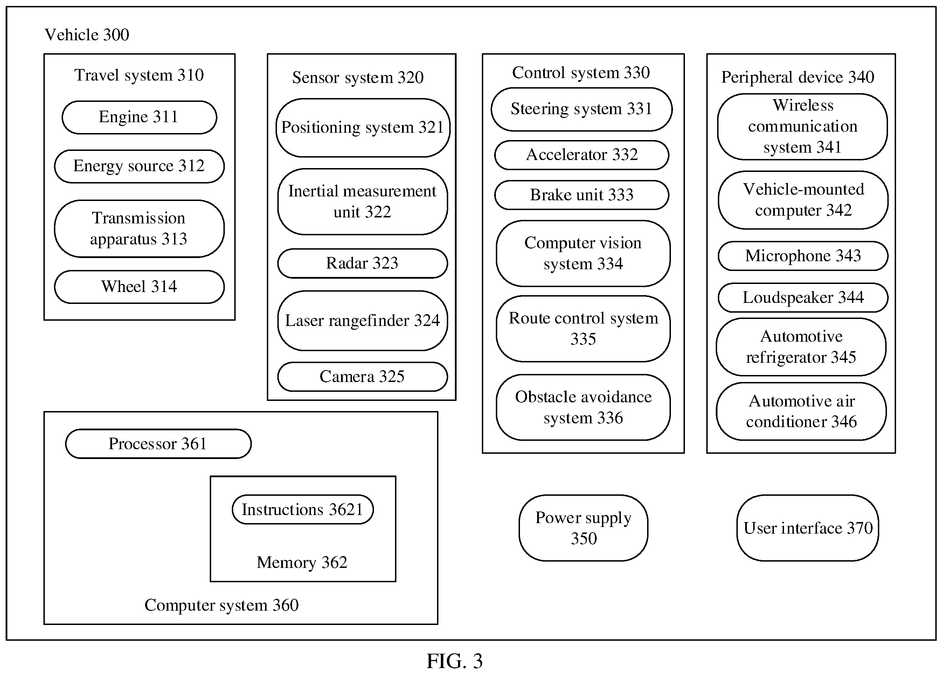

FIG. 3 is a diagram of a structure of a vehicle 300 according to an embodiment of this application. With reference to FIG. 3, the vehicle 300 may include various subsystems, for example, a travel system 310, a sensor system 320, a control system 330, one or more peripheral devices 340, a power supply 350, a computer system 360, and a user interface 370. Optionally, the vehicle 300 may include more or fewer subsystems, and each subsystem may include a plurality of elements. In addition, each subsystem and element of the vehicle 300 may be interconnected in a wired or wireless manner.

The travel system 310 may include a component that provides power for the vehicle 300 to move. An engine 311 may be a motor or a combination of other types of engines. The engine 311 converts an energy source 312 into mechanical energy. Examples of the energy source 312 include a solar panel, a battery, and another power source. A transmission apparatus 313 may transmit mechanical power from the engine 311 to a wheel 314.

The sensor system 320 may include several sensors that sense information about an ambient environment of the vehicle 300. For example, the sensor system 320 may include a positioning system 321, for example, a global positioning system (global positioning system, GPS), a BeiDou system, or another positioning system, an inertial measurement unit (inertial measurement unit, IMU) 322, a radar 323, a laser rangefinder 324, and a camera 325.

The control system 330 controls operations of the vehicle 300 and components of the vehicle 300. The control system 330 may include various elements, including a steering system 331, an accelerator 332, a brake unit 333, a computer vision system 334, a route control system 335, and an obstacle avoidance system 336. The obstacle avoidance system 336 may also be referred to as an obstacle evasion system.

Certainly, in an example, the control system 330 may additionally or alternatively include a component other than those shown and described, or a part of the foregoing components may be removed.

The vehicle 300 interacts with an external sensor, another vehicle, another computer system, or a user by using the peripheral device 340. The peripheral device 340 may include a wireless communication system 341, a vehicle-mounted computer 342, a microphone 343, a loudspeaker 344, an automotive refrigerator 345, and/or an automotive air conditioner 346.

In some embodiments, the peripheral device 340 provides a means for interaction between the user of the vehicle 300 and the user interface 370. For example, the vehicle-mounted computer 342 may provide information for the user of the vehicle 300. The user interface 370 may further operate the vehicle-mounted computer 342 to receive an input of the user. In some other embodiments, the peripheral device 340 may provide a means for communication between the vehicle 300 and another device located in the vehicle. In some other embodiments, the peripheral device 340 may provide a functional service. For example, the automotive refrigerator 345 may provide a cooling function or a heating function for refrigerating food or maintaining a temperature of food. The automotive air conditioner may provide a function of adjusting a temperature and humidity inside the vehicle, for example, reducing or increasing the temperature inside the vehicle, to provide a comfortable driving environment.

The wireless communication system 341 may wirelessly communicate with one or more devices directly or via a communication network.

The power supply 350 may supply power to various components of the vehicle 300.

A part or all of functions of the vehicle 300 are controlled by the computer system 360. The computer system 360 may include at least one processor 361, and the processor 361 executes instructions 3621 stored in a non-transient computer-readable medium, for example, a memory 362. The computer system 360 may alternatively be a plurality of computing devices that control an individual component or a subsystem of the vehicle 300 in a distributed manner.

The processor 361 may be any conventional processor, for example, a commercially available central processing unit (central processing unit, CPU).

In some embodiments, the memory 362 may include the instructions 3621 (for example, program logic), and the instructions 3621 may be executed by the processor 361 to perform various functions of the vehicle 300. The memory 362 may further include additional instructions, including instructions for sending data to, receiving data from, interacting with, and/or controlling one or more of the travel system 310, the sensor system 320, the control system 330, and the peripheral device 340.

In addition to the instructions 3621, the memory 362 may further store data, for example, a road map, route information, and a location, a direction, a speed, and other vehicle data of the vehicle, and other information. Such information may be used by the vehicle 300 and the computer system 360 during operation of the vehicle 300 in autonomous, semi-autonomous, and/or manual modes.

The user interface 370 is configured to provide information for or receive information from the user of the vehicle 300.

The computer system 360 may control the function of the vehicle 300 based on inputs received from various subsystems (for example, the travel system 310, the sensor system 320, and the control system 330) and the user interface 370. In some embodiments, the computer system 360 may provide control over many aspects of the vehicle 300 and the subsystems of the vehicle 300.

In some embodiments, the vehicle 300 may further include a vehicle control unit (not shown in FIG. 3). The vehicle control unit may also be described as a powertrain control unit or an intelligent driving computing platform, and is a core control component of the entire vehicle. After collecting input information of each system and component, and performing corresponding determining based on the input information, the vehicle control unit controls actions of each component in the vehicle 300, and drives the vehicle 300 to travel. Specifically, as a command and management center of the vehicle 300, the vehicle control unit has main functions including driving torque control, optimized control of braking energy, vehicle energy management, maintenance and management of a controller area network (controller area network, CAN) network, fault diagnosis and processing, vehicle status monitoring, and the like. The vehicle control unit plays a role of controlling running of the vehicle. Therefore, quality of the vehicle control unit directly determines stability and safety of the vehicle.

Optionally, one or more of the foregoing components may be installed separately from or associated with the vehicle 300. For example, the memory 362 may be partially or completely separated from the vehicle 300. The foregoing components may be communicatively coupled together in a wired and/or wireless manner.

Optionally, the foregoing components are merely examples. During actual application, components in the foregoing modules may be added or deleted according to an actual requirement. FIG. 3 should not be understood as a limitation on embodiments of this application.

The vehicle 300 may be a new energy vehicle, an electric vehicle, a car, a truck, a motorcycle, a bus, a ship, an airplane, a helicopter, a lawn mower, a recreational vehicle, a playground vehicle, a construction device, a tram, a golf cart, a train, and the like. This is not specially limited in embodiments of this application. Power of the vehicle may be provided by gasoline, diesel, electric energy, solar energy, hydrogen energy, and the like.

In some other embodiments of this application, the vehicle may further include a hardware structure and/or a software module, to achieve the functions in a form of the hardware structure, the software module, or a combination of the hardware structure and the software module. Whether a specific function in the functions is performed by using the hardware structure, the software module, or the combination of the hardware structure and the software module depends on specific applications and design constraints of the technical solutions.

The following describes the method provided in embodiments of this application with reference to the accompanying drawings.

To ensure that working efficiency of an automotive refrigerator is improved at low costs, this application provides a temperature control method. The method may be applied to various devices that use the automotive refrigerator (which is subsequently described as a first apparatus) and an automotive air conditioner (which is subsequently described as a second apparatus), for example, applied to the vehicle 300 shown in FIG. 3. The method may be executed by a vehicle or a device other than the vehicle, or may be a processor on the vehicle or the device other than the vehicle, for example, the processor 21 and the processor 361 mentioned in the foregoing content.

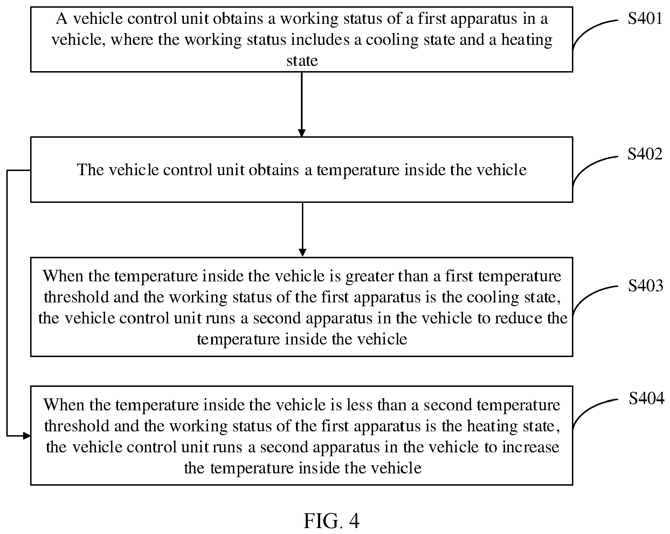

An embodiment of this application is described by using a new energy vehicle as an example. FIG. 4 is a schematic flowchart of a temperature control method according to an embodiment of this application. The temperature control method includes S401 to S404 below.

S401: A vehicle control unit obtains a working status of a first apparatus in a vehicle, where the working status includes a cooling state and a heating state.

In this embodiment of this application, the vehicle control unit is a core control component of the vehicle. The vehicle control unit obtains the working status of the first apparatus in the vehicle, makes a corresponding determining and decision based on the working status of the first apparatus, and controls an action of each component in the vehicle (for example, controls a second apparatus to run) based on the foregoing decision, to adjust a temperature inside the vehicle.

In this embodiment of this application, the first apparatus is an automotive refrigerator that provides a cooling function or a temperature holding function in the vehicle. The first apparatus is an automotive semiconductor refrigerator.

In this embodiment of this application, a status of the first apparatus includes a working status and a non-working status. The working status is a state in which the first apparatus is started, and the first apparatus is run, to provide a cooling and refrigeration function or a heating and temperature holding function. The non-working status is a state in which the first apparatus is not started, and may also be understood as that the first apparatus is not powered on or the first apparatus is not run.

The working status includes the cooling state and the heating state. When the working status of the first apparatus is the cooling state, the first apparatus provides the refrigeration function. When the working status of the first apparatus is the heating state, the first apparatus provides the temperature holding function.

It may be understood that, during working, the first apparatus can be in only one working status, and cannot be in two working statuses at the same time.

Optionally, the working status of the first apparatus in the vehicle may be represented by a flag bit.

In some examples, a flag bit is set for the working status of the first apparatus, and a value of the flag bit represents the working status of the first apparatus in the vehicle. For example, if the working status of the first apparatus is 1, it indicates that the first apparatus is in the cooling state. If the working status of the first apparatus is 2, it indicates that the first apparatus is in the heating state. If the status of the first apparatus is 0, it indicates that the first apparatus is in the non-working status. A specific representation manner of the working status of the first apparatus is not specifically limited in this embodiment of this application.

In some embodiments of this application, the vehicle control unit obtains the working status of the first apparatus by using various sensors mounted on the vehicle.

In some other embodiments of this application, the vehicle control unit obtains the working status of the first apparatus from various subsystems of the vehicle. In the foregoing example of the vehicle 300, the vehicle control unit obtains the working status of the first apparatus from an automotive refrigerator 345 of the vehicle 300.

It may be understood that, in this embodiment of this application, before the vehicle control unit obtains the working status of the first apparatus in the vehicle, the first apparatus has been started and run in the vehicle.

In a possible implementation, the vehicle control unit starts the first apparatus in response to a user operation.

In some examples, in response to an operation of starting the first apparatus in the vehicle by a user (for example, the user taps a function button of the first apparatus to start the first apparatus), the vehicle control unit obtains a working status used during previous running of the first apparatus, preset data, or data set by the user, and the vehicle control unit starts and runs the first apparatus based on the working status used during the previous running of the first apparatus, the preset data, or the data set by the user.

It may be understood that the vehicle control unit may store a working status and related data that are of the first apparatus and that are present during running before each time the first apparatus is stopped. For example, the working status of the first apparatus present during the previous running is the cooling state, and a cooling temperature is 26°C. When starting the first apparatus again in response to the user operation, the vehicle control unit starts the first apparatus based on stored historical data, to be specific, the cooling state and a cooling temperature of 26°C. The vehicle control unit may alternatively prestore startup data corresponding to each type of working status, and the vehicle control unit starts the first apparatus based on the preset data in response to the user operation. The vehicle control unit may alternatively receive startup data, of the first apparatus, set by the user, and start the first apparatus based on the data set by the user. For example, the user may tap an icon of the first apparatus on a function interface, and set the startup data of the first apparatus.

In some other examples, the vehicle control unit receives a first signal sent by a remote device, and the vehicle control unit starts the first apparatus based on a working status indicated by the first signal.

The remote device may be an electronic device on which an application (application, APP) for remotely controlling the vehicle is installed. The first signal indicates to start the first apparatus, and the first signal may include a working status, a working temperature, and the like.

It may be understood that a specific implementation of starting and running the first apparatus is not limited in this embodiment of this application.

Optionally, before obtaining the working status of the first apparatus in the vehicle, the vehicle control unit first obtains the status of the first apparatus. If the status of the first apparatus is the working status, the subsequent temperature control method is performed; or otherwise, the subsequent temperature control method is not performed. In other words, a prerequisite for performing the temperature control method in this embodiment of this application is that the first apparatus in the vehicle has been started and run.

The temperature control method provided in this embodiment of this application may be applied to an application scenario in which the first apparatus is run for use. For example, when there is a passenger in the vehicle, the passenger starts and runs the first apparatus. Alternatively, the temperature control method provided in this embodiment of this application may be applied to an application scenario in which the first apparatus experiences delayed power-off in a delayed vehicle power-off scenario (which may be understood as a scenario in which, after the vehicle is parked, a power supply is automatically stopped after a delay of a period of time is set). For example, if the user temporarily gets off the vehicle in a service area and leaves the vehicle, the first apparatus has been started in the vehicle before the user gets off the vehicle, and the user taps a delayed power-off function button in the vehicle, each functional component (for example, the first apparatus) that has been started in the vehicle is stopped after delaying for predetermined duration. Alternatively, the temperature control method provided in this embodiment of this application may be applied to an application scenario in which the first apparatus is remotely started. For example, before travel, the first apparatus in the vehicle is remotely started by using a remote device. An application scenario for temperature control is not limited in this embodiment of this application.

S402: The vehicle control unit obtains the temperature inside the vehicle.

In this embodiment of this application, the temperature inside the vehicle is temperature data, inside the vehicle, obtained in real time after the vehicle control unit obtains the working status of the first apparatus.

In some embodiments of this application, the vehicle control unit obtains the temperature inside the vehicle in real time by using a temperature sensor mounted on the vehicle.

For example, the temperature data inside the vehicle is detected in real time by using a temperature sensor mounted at a key position (for example, a dashboard, a seat, or a center console) in the vehicle.

In some other embodiments of this application, the vehicle control unit obtains the temperature inside the vehicle from various subsystems of the vehicle.

In some examples, if the second apparatus is started, the vehicle control unit may obtain the temperature inside the vehicle in real time by interacting with the second apparatus. For example, in the example of the vehicle 300 described above, the vehicle control unit interacts with an automotive air conditioner 346 in the vehicle 300 to obtain the temperature inside the vehicle.

It may be understood that a specific implementation in which the vehicle control unit obtains the temperature inside the vehicle is not limited in this embodiment of this application.

S403: When the temperature inside the vehicle is greater than a first temperature threshold and the working status of the first apparatus is the cooling state, the vehicle control unit runs the second apparatus in the vehicle to reduce the temperature inside the vehicle.

In this embodiment of this application, the first temperature threshold is a predetermined maximum temperature threshold at which the first apparatus is run in the cooling state without reducing cooling efficiency. In other words, when the temperature inside the vehicle is less than or equal to the first temperature threshold, the cooling efficiency of the first apparatus is high, and when the temperature inside the vehicle is greater than the first temperature threshold, the cooling efficiency of the first apparatus is reduced, and cooling cannot be performed efficiently.

In some examples, the first temperature threshold is a temperature value obtained through experiments. For example, cooling efficiency of the first apparatus running at different temperatures is tested. If the cooling efficiency of the first apparatus progressively decreases beyond a specific temperature (for example, 30 degrees Celsius), the temperature (30 degrees Celsius) is determined as the first temperature threshold.

In some other examples, the first temperature threshold may be determined based on historical data or experience. A specific manner of determining the first temperature threshold and a specific value of the first temperature threshold are not limited in this embodiment of this application.

In this embodiment of this application, the second apparatus is an automotive air conditioner that adjusts the temperature inside the vehicle in the vehicle.

In this embodiment of this application, for each working status of the first apparatus, a temperature threshold that affects working efficiency in the working status is determined, and a corresponding control strategy is set for whether the temperature inside the vehicle exceeds the temperature threshold. In other words, in this embodiment of this application, the first apparatus and the second apparatus are coordinated, to control the temperature inside the vehicle to maintain at a temperature suitable for the first apparatus to work efficiently, thereby ensuring working efficiency of the first apparatus.

Specifically, when the temperature inside the vehicle is greater than the first temperature threshold and the working status of the first apparatus is the cooling state, it indicates that the current temperature inside the vehicle is high, affecting the cooling efficiency of the first apparatus. In this case, the vehicle control unit runs the second apparatus in the vehicle to reduce the temperature inside the vehicle. When the temperature inside the vehicle is less than or equal to the first temperature threshold and the working status of the first apparatus is the cooling state, it indicates that the current temperature inside the vehicle does not affect the cooling efficiency of the first apparatus. In this case, there is no need to run the second apparatus to adjust the temperature inside the vehicle.

In some embodiments of this application, that the vehicle control unit runs the second apparatus in the vehicle to reduce the temperature inside the vehicle includes: When the second apparatus is not started, the vehicle control unit starts the second apparatus, and runs the second apparatus based on a first temperature setpoint, to reduce the temperature inside the vehicle.

The first temperature setpoint may be a preset temperature value that does not exceed the first temperature threshold. The first temperature setpoint may alternatively be a temperature value, among the historical data stored in the vehicle control unit, that is recently used by the user and that does not exceed the first temperature threshold. The first temperature setpoint may alternatively be a temperature value that is set by the user and that does not exceed the first temperature threshold.

For example, the first temperature threshold is 30°C. The first temperature setpoint may be any temperature value less than or equal to 30°C, for example, 28°C. For example, in a driving process, the user starts the first apparatus, and enables the cooling state. In this case, the vehicle control unit obtains, by using the temperature sensor, that the temperature inside the vehicle is 31°C. The vehicle control unit determines, by comparing the current temperature inside the vehicle (31°C) with the first temperature threshold (30°C), that the current temperature inside the vehicle is greater than the first temperature threshold. The vehicle control unit starts the second apparatus, and runs the second apparatus based on the preset first temperature threshold, that is, 28°C, to reduce the temperature inside the vehicle. For another example, the user starts the second apparatus during last drive, the second apparatus is in the cooling state, and a temperature of the second apparatus present during running is 26°C. When the user drives the vehicle again, the first apparatus is started, and the cooling state is enabled. In this case, the vehicle control unit obtains the current temperature inside the vehicle (30.5°C), and determines, through comparison, that the current temperature inside the vehicle is greater than the first temperature threshold (30°C). The vehicle control unit starts the second apparatus, and runs the second apparatus based on the temperature value (26°C) of the second apparatus preset during previous running, to reduce the temperature inside the vehicle.

In some other embodiments of this application, that the vehicle control unit runs the second apparatus in the vehicle to reduce the temperature inside the vehicle includes: When the second apparatus has been started, the vehicle control unit runs the second apparatus based on a second temperature setpoint, to reduce the temperature inside the vehicle.

It may be understood that, in a current case, although the second apparatus has been started in the vehicle, the temperature inside the vehicle still exceeds the first temperature threshold. Therefore, a temperature value of the second apparatus present during running needs to be reduced, to reduce the temperature inside the vehicle.

The second temperature setpoint is a preset temperature value that does not exceed the first temperature threshold. The second temperature setpoint may alternatively be the temperature value, among the historical data stored in the vehicle control unit, that is recently used by the user and that does not exceed the first temperature threshold. The second temperature setpoint may alternatively be the temperature value that is set by the user and that does not exceed the first temperature threshold. The second temperature setpoint may alternatively be a temperature value that is automatically set by the vehicle control unit based on the current temperature value of the second apparatus present during running and that does not exceed the temperature value of the first temperature threshold.

It may be understood that the second temperature setpoint may be the same as or different from the first temperature setpoint.

For example, in winter, a beverage is refrigerated in the automotive refrigerator, and the automotive air conditioner is started and set to 31°C in the vehicle. With running of the automotive air conditioner, the temperature inside the vehicle is gradually increased to 31°C, which exceeds the first temperature threshold (30°C) present when the automotive refrigerator is in the cooling state. In this case, a current temperature value set for the automotive air conditioner needs to be reduced, for example, the temperature value of the automotive air conditioner is set to 29°C, to reduce the temperature inside the vehicle.

It may be understood that a specific implementation of starting and running the second apparatus is not limited in this embodiment of this application.

In this embodiment of this application, when determining that the temperature inside the vehicle is greater than the first temperature threshold, the vehicle control unit may further prompt, in a preset manner, the user to adjust the temperature inside the vehicle by using the second apparatus.

For example, when determining that the temperature inside the vehicle is greater than the first temperature threshold, the vehicle control unit may remind the user in a manner, for example, voice broadcast or visual reminder on a display interface like the dashboard, that the current temperature inside the vehicle is high, and that the second apparatus needs to be started to reduce the temperature inside the vehicle.

It may be understood that the foregoing examples merely describe how the vehicle control unit runs the second apparatus to reduce the temperature inside the vehicle, but do not limit how to stop the second apparatus. To save power and prevent the second apparatus from consuming excessive power due to long-time running and making the vehicle unable to be started, a condition for stopping the second apparatus further needs to be set.

In some embodiments of this application, after the vehicle control unit runs the second apparatus in the vehicle to reduce the temperature inside the vehicle, the method further includes: The vehicle control unit stops the second apparatus after preset duration.

The preset duration may be duration preset by a system, or may be duration set by the user.

In some examples, the vehicle control unit receives a user operation in a process of starting the second apparatus, determines the preset duration for running the second apparatus, and stops the second apparatus after the second apparatus is run for the preset duration.

In some other examples, the vehicle control unit automatically stops the second apparatus after the second apparatus is run for the preset duration preset by the system.

In some other embodiments of this application, after the vehicle control unit runs the second apparatus in the vehicle to reduce the temperature inside the vehicle, the method further includes: automatically stopping the second apparatus when the temperature inside the vehicle is less than or equal to a third temperature threshold.

The third temperature threshold may be a temperature value that is less than or equal to the first temperature threshold.

It may be understood that, after the vehicle control unit runs the second apparatus (for cooling), the temperature inside the vehicle gradually decreases. When the temperature inside the vehicle is less than or equal to the third temperature threshold, it indicates that the temperature inside the vehicle does not exceed the first temperature threshold in this case, and that the first apparatus can perform cooling efficiently at this temperature. Therefore, the second apparatus may be stopped, and the temperature inside the vehicle may gradually increase from the third temperature threshold. When the temperature inside the vehicle is greater than the first temperature threshold again, the second apparatus is started again to perform cooling. During actual application, the third temperature threshold is usually a temperature value (for example, 28°C) that is less than the first temperature threshold. In this way, there is a difference between the third temperature threshold and the first temperature threshold. It needs to take a long time for the temperature inside the vehicle to increase from the third temperature threshold to the first temperature threshold. A temperature increase process is a slow process, so that the second apparatus can be prevented from being started for a plurality of times (or being frequently started) within a short time, a use interval of the second apparatus is prolonged, and power consumption is reduced.

In some other embodiments of this application, after the vehicle control unit runs the second apparatus in the vehicle to reduce the temperature inside the vehicle, the method further includes: when the temperature inside the vehicle is less than or equal to the first temperature threshold, obtaining a temperature outside the vehicle; and if the temperature outside the vehicle is less than or equal to the first temperature threshold, setting a status of the second apparatus to a fresh air mode.

The fresh air mode is a working mode of the second apparatus. In the fresh air mode, the second apparatus draws air from the outside of the vehicle, and circulates the air into the vehicle. In other words, fresh air outside the vehicle flows into the vehicle for vehicle ventilation.

Specifically, after the vehicle control unit runs the second apparatus to perform cooling to reduce the temperature inside the vehicle, the temperature inside the vehicle gradually decreases. When the temperature inside the vehicle is less than or equal to the first temperature threshold, the temperature outside the vehicle is obtained. If the temperature outside the vehicle is less than or equal to the first temperature threshold, it indicates that a difference between the temperature outside the vehicle and the temperature inside the vehicle is small, and both the temperature outside the vehicle and the temperature inside the vehicle are less than the first temperature threshold. In this case, a cooling mode of the second apparatus is disabled, and the second apparatus is set to the fresh air mode, to exchange air with the outside of the vehicle, saving power of the second apparatus.

It may be understood that, running the second apparatus in the vehicle by the vehicle control unit to reduce the temperature inside the vehicle is an internal circulation process. The vehicle control unit controls the second apparatus to perform cooling to reduce the temperature inside the vehicle. In this case, there is no airflow exchange between the inside of the vehicle and the outside of the vehicle. When the temperature outside the vehicle/the temperature inside the vehicle is less than or equal to the first temperature threshold, it indicates that the difference between the temperature inside the vehicle and the temperature outside the vehicle is small. In this case, a cooling mode of the air conditioner may be disabled, and the fresh air mode may be enabled, to maintain the temperature inside the vehicle, and fresh air may be drawn, so that user comfort is improved, and power is saved.

In some other embodiments of this application, when a state of charge of the vehicle is less than a preset state-of-charge threshold, the vehicle control unit stops the first apparatus and/or the second apparatus.

The preset state-of-charge threshold may be a preset minimum threshold of a state of charge required for ensuring normal traveling of the vehicle. For example, the preset state-of-charge threshold is 10%.

It may be understood that a specific implementation in which the vehicle control unit stops the second apparatus is not limited in this embodiment of this application.

It may be understood that both running of the first apparatus and the second apparatus requires power provided by a vehicle battery. When the state of charge of the vehicle is less than the preset state-of-charge threshold, the vehicle should be kept traveling normally first, and another power-consuming component, for example, the first apparatus and/or the second apparatus, should be stopped.

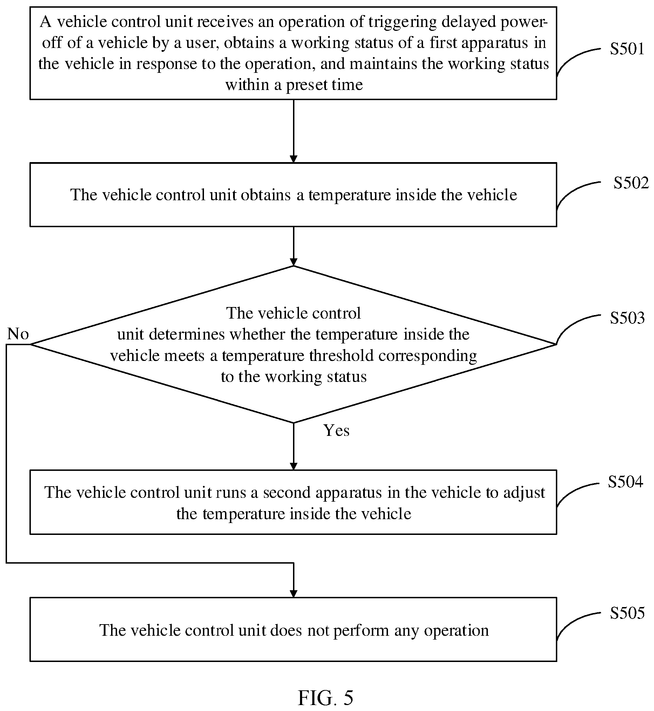

For example, FIG. 5 is a flowchart of temperature control in a scenario in which the user has started the first apparatus and the vehicle experiences delayed power-off.

S501: The vehicle control unit receives an operation of triggering the delayed power-off of the vehicle by the user, obtains the working status of the first apparatus in the vehicle in response to the operation, and maintains the working status within a preset time.

In this embodiment of this application, the vehicle control unit receives the operation of triggering the delayed power-off of the vehicle by the user, and obtains the working status of the first apparatus in the vehicle. The working status includes the cooling state and the heating state.

S502: The vehicle control unit obtains the temperature inside the vehicle.

In this embodiment of this application, for a specific implementation of step S502, refer to the foregoing descriptions of S402. Details are not described herein again.

S503: The vehicle control unit determines whether the temperature inside the vehicle meets a temperature threshold corresponding to the working status; and if yes, S504 is performed; or otherwise, S505 is performed.

In this embodiment of this application, when the working status of the first apparatus is the cooling state, whether the temperature inside the vehicle meets the temperature threshold corresponding to the working status is specifically: whether the temperature inside the vehicle is greater than the first temperature threshold corresponding to the cooling state.

Specifically, the vehicle control unit determines that the first apparatus corresponds to the first temperature threshold in the cooling state, and determines, through comparison, whether the temperature inside the vehicle is greater than the first temperature threshold; and if the temperature inside the vehicle is greater than the first temperature threshold, S504 is performed; or otherwise, S505 is performed.

In this embodiment of this application, when the working status of the first apparatus is the heating state, whether the temperature inside the vehicle meets the temperature threshold corresponding to the working status is specifically: whether the temperature inside the vehicle is less than the second temperature threshold corresponding to the heating state.

Specifically, the vehicle control unit determines that the first apparatus corresponds to the second temperature threshold in the heating state, and determines, through comparison, whether the temperature inside the vehicle is less than the second temperature threshold; and if the temperature inside the vehicle is less than the second temperature threshold, S504 is performed; or otherwise, S505 is performed.

S504: The vehicle control unit runs the second apparatus in the vehicle to adjust the temperature inside the vehicle.

In this embodiment of this application, when the working status of the first apparatus is the cooling state, and the temperature inside the vehicle is greater than the first temperature threshold corresponding to the cooling state, the vehicle control unit runs the second apparatus in the vehicle to reduce the temperature inside the vehicle.

In this embodiment of this application, when the working status of the first apparatus is the heating state, and the temperature inside the vehicle is less than the second temperature threshold corresponding to the heating state, the vehicle control unit runs the second apparatus in the vehicle to increase the temperature inside the vehicle.

In this embodiment of this application, for a specific implementation of step S504, refer to the foregoing descriptions of S403 or S404. Details are not described herein again.

S505: The vehicle control unit does not perform any operation.

It may be understood that the foregoing example is described by using an example in which the working status of the first apparatus is the cooling state. The following describes the temperature control method by using an example in which the working status of the first apparatus is the heating state. After S402, the method further includes S404.

S404: When the temperature inside the vehicle is less than the second temperature threshold and the working status of the first apparatus is the heating state, the vehicle control unit runs the second apparatus in the vehicle to increase the temperature inside the vehicle.

In this embodiment of this application, the second temperature threshold is a predetermined minimum temperature threshold at which the first apparatus is run in the heating state without reducing heating efficiency. In other words, when the temperature inside the vehicle is greater than or equal to the second temperature threshold, the heating efficiency of the first apparatus is high, and when the temperature inside the vehicle is less than the second temperature threshold, the heating efficiency of the first apparatus is reduced, and heating cannot be performed efficiently.

In some examples, the second temperature threshold is a temperature value obtained through experiments. Alternatively, the second temperature threshold may be determined based on historical data or experience. For example, the second temperature threshold is 10°C.

In this embodiment of this application, for each working status of the first apparatus, a temperature threshold that affects working efficiency in the working status is determined, and a corresponding control strategy is set for whether the temperature inside the vehicle exceeds the temperature threshold. In other words, in this embodiment of this application, the first apparatus and the second apparatus are coordinated, to control the temperature inside the vehicle to maintain at a temperature suitable for the first apparatus to work efficiently, thereby ensuring working efficiency of the first apparatus.

Specifically, when the temperature inside the vehicle is less than the second temperature threshold and the working status of the first apparatus is the heating state, it indicates that the current temperature inside the vehicle is low, affecting the heating efficiency of the first apparatus. In this case, the vehicle control unit runs the second apparatus in the vehicle to increase the temperature inside the vehicle. When the temperature inside the vehicle is greater than or equal to the second temperature threshold and the working status of the first apparatus is the heating state, it indicates that the current temperature inside the vehicle does not affect the heating efficiency of the first apparatus. In this case, there is no need to run the second apparatus to adjust the temperature inside the vehicle.

In some embodiments of this application, that the vehicle control unit runs the second apparatus in the vehicle to increase the temperature inside the vehicle includes: When the second apparatus is not started, the vehicle control unit starts the second apparatus, and runs the second apparatus based on a third temperature setpoint, to increase the temperature inside the vehicle.

The third temperature setpoint may be a preset temperature value that is greater than or equal to the second temperature threshold. The third temperature setpoint may alternatively be a temperature value, among the historical data stored in the vehicle control unit, that is recently used by the user and that is greater than or equal to the second temperature threshold. The third temperature setpoint may alternatively be a temperature value that is set by the user and that is greater than or equal to the second temperature threshold.

For example, the second temperature threshold is 10°C. The third temperature setpoint may be any temperature value greater than or equal to 10°C, for example, 18°C.

In some other embodiments of this application, that the vehicle control unit runs the second apparatus in the vehicle to increase the temperature inside the vehicle includes: When the second apparatus has been started, the vehicle control unit runs the second apparatus based on a fourth temperature setpoint, to increase the temperature inside the vehicle.

It may be understood that, in a current case, although the second apparatus has been started in the vehicle, the temperature inside the vehicle is still less than the second temperature threshold. Therefore, a temperature value of the second apparatus present during running needs to be increased, to increase the temperature inside the vehicle.

The fourth temperature setpoint is a preset temperature value that is greater than or equal to the second temperature threshold. The fourth temperature setpoint may alternatively be a temperature value, among the historical data stored in the vehicle control unit, that is recently used by the user and that is greater than or equal to the second temperature threshold. The fourth temperature setpoint may alternatively be a temperature value that is set by the user and that is greater than or equal to the second temperature threshold. The fourth temperature setpoint may alternatively be a temperature value that is automatically set by the vehicle control unit based on the current temperature value of the second apparatus present during running and that is greater than or equal to the temperature value of the second temperature threshold.

It may be understood that the fourth temperature setpoint may be the same as or different from the third temperature setpoint.

It may be understood that a specific implementation of starting and running the second apparatus is not limited in this embodiment of this application.

In this embodiment of this application, when determining that the temperature inside the vehicle is less than the second temperature threshold, the vehicle control unit may further prompt, in a preset manner, the user to adjust the temperature inside the vehicle by using the second apparatus.

It may be understood that, for a specific implementation of reminding the user by the vehicle control unit in this embodiment of this application, refer to S403 or the conventional technology. Details are not described herein again.

In some embodiments of this application, after the vehicle control unit runs the second apparatus in the vehicle to increase the temperature inside the vehicle, the method further includes: The vehicle control unit stops the second apparatus after preset duration.

It may be understood that, for a specific implementation in which the vehicle control unit stops the second apparatus after the preset duration, refer to the foregoing descriptions of S403. Details are not described herein again.

In some other embodiments of this application, after the vehicle control unit runs the second apparatus in the vehicle to increase the temperature inside the vehicle, the method further includes: automatically stopping the second apparatus when the temperature inside the vehicle is greater than or equal to a fourth temperature threshold.

The fourth temperature threshold may be a temperature value that is greater than or equal to the second temperature threshold.

It may be understood that, after the vehicle control unit runs the second apparatus (for heating), the temperature inside the vehicle gradually increases. When the temperature inside the vehicle is greater than or equal to the fourth temperature threshold, it indicates that the temperature inside the vehicle is greater than or equal to the second temperature threshold in this case, and that the first apparatus can perform heating efficiently at this temperature. Therefore, the second apparatus may be stopped, and the temperature inside the vehicle may gradually decrease from the fourth temperature threshold. When the temperature inside the vehicle is less than the second temperature threshold again, the second apparatus is started again to perform heating. During actual application, the fourth temperature threshold is usually a temperature value that is greater than the second temperature threshold. In this way, the second apparatus can be prevented from being started for a plurality of times within a short time, a use interval of the second apparatus is prolonged, and power consumption is reduced.

In some other embodiments of this application, after the vehicle control unit runs the second apparatus in the vehicle to reduce the temperature inside the vehicle, the method further includes: when the temperature inside the vehicle is greater than or equal to the second temperature threshold, obtaining a temperature outside the vehicle; and if the temperature outside the vehicle is greater than or equal to the second temperature threshold, setting the second apparatus to a fresh air mode.

Specifically, after the vehicle control unit runs the second apparatus to perform heating to increase the temperature inside the vehicle, the temperature inside the vehicle gradually increases. When the temperature inside the vehicle is greater than or equal to the second temperature threshold, the temperature outside the vehicle is obtained. If the temperature outside the vehicle is greater than or equal to the second temperature threshold, it indicates that a difference between the temperature outside the vehicle and the temperature inside the vehicle is small, and both the temperature outside the vehicle and the temperature inside the vehicle exceed the second temperature threshold. In this case, a heating mode of the second apparatus may be disabled, and the second apparatus is set to the fresh air mode, to exchange air with the outside of the vehicle, maintaining the temperature inside the vehicle, and saving power of the second apparatus.

In some other embodiments of this application, when a state of charge of the vehicle is less than a preset state-of-charge threshold, the vehicle control unit stops the first apparatus and/or the second apparatus.

It may be understood that a specific implementation in which the vehicle control unit stops the second apparatus is not limited in this embodiment of this application. For details, refer to the foregoing descriptions of S403. Details are not described herein again.

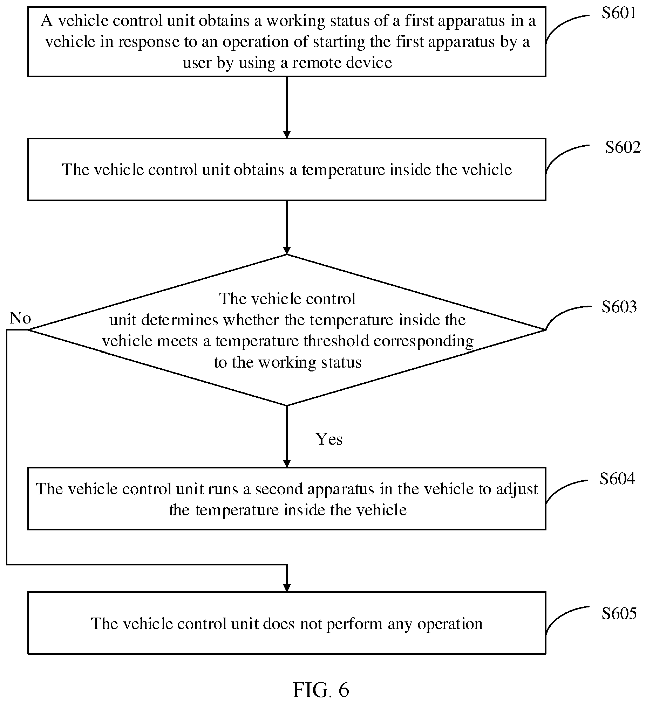

For example, FIG. 6 is a flowchart of temperature control in an application scenario in which the user remotely operates to start the first apparatus and the vehicle remotely starts the first apparatus.

S601: The vehicle control unit obtains the working status of the first apparatus in the vehicle in response to an operation of starting the first apparatus by the user by using the remote device.

In this embodiment of this application, the vehicle control unit receives the operation of starting the first apparatus by the user by using the remote device, and obtains the working status of the first apparatus in the vehicle in response to the operation. The working status includes the cooling state and the heating state.

S602: The vehicle control unit obtains the temperature inside the vehicle.

In this embodiment of this application, for a specific implementation of step S602, refer to the foregoing descriptions of S402. Details are not described herein again.

S603: The vehicle control unit determines whether the temperature inside the vehicle meets a temperature threshold corresponding to the working status; and if yes, S604 is performed; or otherwise, S605 is performed.

In this embodiment of this application, for a specific implementation of step S603, refer to the foregoing descriptions of S503. Details are not described herein again.

S604: The vehicle control unit runs the second apparatus in the vehicle to adjust the temperature inside the vehicle.

In this embodiment of this application, for a specific implementation of step S604, refer to the foregoing descriptions of S504. Details are not described herein again.

S605: The vehicle control unit does not perform any operation.

According to the foregoing process, in this embodiment of this application, the vehicle control unit may obtain the working status of the first apparatus and the temperature inside the vehicle, where the working status includes the cooling state and the heating state; and when the temperature inside the vehicle is greater than the first temperature threshold and the working status of the first apparatus is the cooling state, run the second apparatus in the vehicle to reduce the temperature inside the vehicle; or when the temperature inside the vehicle is less than the second temperature threshold and the working status of the first apparatus is the heating state, run the second apparatus in the vehicle to increase the temperature inside the vehicle. According to the solutions in this embodiment of this application, based on the working status of the first apparatus, when the temperature inside the vehicle affects efficiency of the first apparatus in the working status, the temperature inside the vehicle is regulated by using the second apparatus, so that the first apparatus works efficiently. The method provided in this embodiment of this application can allow the automotive refrigerator to work efficiently at low costs, ensure normal use of the automotive refrigerator at different ambient temperatures, and expand usage scenarios of the automotive refrigerator.

It may be understood that the system architecture and the service scenario described in this application are intended to describe the technical solutions in this application more clearly, and do not constitute a unique limitation on the technical solutions provided in this application. A person of ordinary skill in the art may learn that, with evolution of the system architecture and emergence of new service scenarios, the technical solutions provided in this application are also applicable to similar technical problems.

The foregoing mainly describes the solutions provided in embodiments of this application from a perspective of method. To achieve the foregoing functions, corresponding hardware structures and/or software modules for performing the functions are included. A person skilled in the art should be easily aware that, in combination with units and algorithm steps of the examples described in embodiments disclosed in this specification, this application can be implemented by hardware or a combination of hardware and computer software. Whether a specific function is performed by hardware or hardware driven by computer software depends on specific applications and design constraints of the technical solutions. A person skilled in the art may use different methods to achieve the described functions for each specific application, but it should not be considered that the implementation goes beyond the scope of this application.

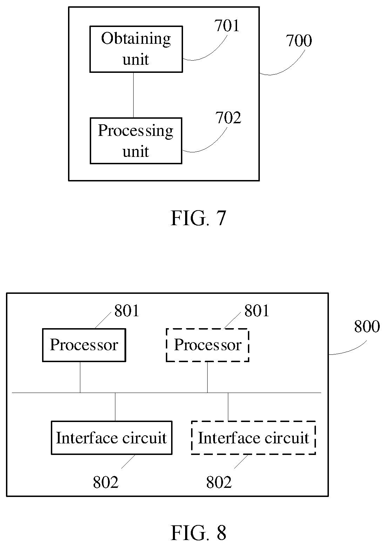

FIG. 7 is a diagram of a possible structure of the temperature control apparatus in the foregoing embodiment of this application. As shown in FIG. 7, the temperature control apparatus 700 may include an obtaining unit 701 and a processing unit 702. The temperature control apparatus 700 is configured to perform the foregoing temperature control method, for example, configured to perform the temperature control method shown in FIG. 4, FIG. 5, or FIG. 6. Certainly, the temperature control apparatus 700 may further include another module, or the temperature control apparatus 700 may include fewer modules. This is not limited in embodiments of this application.

The obtaining unit 701 is configured to obtain a working status of a first apparatus in a vehicle. The obtaining unit 701 is further configured to obtain a temperature inside a vehicle.

The working status includes a cooling state and a heating state.

The processing unit 702 is configured to: when the temperature inside the vehicle is greater than a first temperature threshold and the working status of the first apparatus is the cooling state, run a second apparatus in the vehicle by using a vehicle control unit to reduce the temperature inside the vehicle.

Alternatively, the processing unit 702 is further configured to: when the temperature inside the vehicle is less than a second temperature threshold and the working status of the first apparatus is the heating state, run the second apparatus in the vehicle by using the vehicle control unit to increase the temperature inside the vehicle.

Optionally, the temperature control apparatus 700 shown in FIG. 7 may further include a storage unit (not shown in FIG. 7). The storage unit stores a program or instructions. When the obtaining unit 701 and the processing unit 702 execute the program or the instructions, the temperature control apparatus 700 shown in FIG. 7 is enabled to perform the temperature control method in the foregoing method embodiment.

Operations and/or functions of units in the temperature control apparatus 700 are respectively intended to implement corresponding procedures of the temperature control method in the foregoing method embodiment. All related content of the steps in the foregoing method embodiment may be cited in function descriptions of corresponding functional units. For brevity, details are not described herein again.

For a technical effect of the temperature control apparatus 700 shown in FIG. 7, refer to the technical effect of the temperature control method in the foregoing method embodiment. Details are not described herein again.

For example, with reference to FIG. 2, functions achieved by the obtaining unit 701 and the processing unit 702 in the temperature control apparatus 700 may be achieved by executing program code in a memory 22 in FIG. 2 by a processor 21 in FIG. 2.

An embodiment of this application further provides a chip system. As shown in FIG. 8, the chip system 800 includes at least one processor 801 and at least one interface circuit 802. In an example, when the chip system 800 includes one processor and one interface circuit, the processor may be a processor 801 shown in a solid-line box (or a processor 801 shown in a dashed-line box) in FIG. 8, and the interface circuit may be an interface circuit 802 shown in a solid-line box (or an interface circuit 802 shown in a dashed-line box) in FIG. 8. When the chip system 800 includes two processors and two interface circuits, the two processors include the processor 801 shown in the solid-line box and the processor 801 shown in the dashed-line box in FIG. 8, and the two interface circuits include the interface circuit 802 shown in the solid-line box and the interface circuit 802 shown in the dashed-line box in FIG. 8. This is not limited herein.

The processor 801 and the interface circuit 802 may be interconnected through a line. For example, the interface circuit 802 may be configured to receive a signal. For another example, the interface circuit 802 may be configured to send a signal to another apparatus (for example, the processor 801). For example, the interface circuit 802 may read instructions stored in a memory, and send the instructions to the processor 801. When the instructions are executed by the processor 801, the temperature control apparatus is enabled to perform the steps in the foregoing embodiment. Certainly, the chip system may further include another discrete component. This is not specifically limited in embodiments of this application.

For example, the chip system may be a field programmable gate array (field programmable gate array, FPGA), or may be an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP) circuit, a microcontroller unit (microcontroller unit, MCU), a programmable logic device (programmable logic device, PLD), or another integrated chip.

It should be understood that steps in the foregoing method embodiment may be completed by using an integrated logic circuit of hardware in the processor or instructions in a form of software. The steps of the method disclosed with reference to embodiments of this application may be directly performed and completed by a hardware processor, or may be performed and completed by a combination of hardware in the processor and a software module.

An embodiment of this application further provides a computer-readable storage medium that stores one or more computer programs. The one or more computer programs include instructions. When the instructions are executed by a computer, the computer is enabled to perform a corresponding procedure of the temperature control method in the foregoing embodiment.

In some embodiments, the disclosed method may be implemented as computer program instructions encoded in a machine-readable format on the computer-readable storage medium or encoded on another non-transitory medium or product.

An embodiment of this application further provides a computer program product. When the computer program product runs on a computer, the computer is enabled to perform the foregoing related steps to implement the temperature control method in the foregoing embodiment.

The apparatus, the computer-readable storage medium, the computer program product, or the chip provided in embodiments of this application is configured to perform the corresponding method provided above. Therefore, for beneficial effects that can be achieved, refer to the beneficial effects of the corresponding method provided above. Details are not described herein again.

Methods or algorithm steps described in combination with the content disclosed in embodiments of this application may be implemented by hardware, or may be implemented by executing software instructions by the processor. The software instructions may include a corresponding software module. The software module may be stored in a random access memory (random access memory, RAM), a flash memory, a read-only memory, an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only disk (compact disc read-only memory, CD-ROM), or a storage medium of any other form well-known in the art. For example, a storage medium is coupled to a processor, so that the processor can read information from the storage medium and write information into the storage medium. Certainly, the storage medium may be a component of the processor. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A temperature control method, wherein the method comprises:
obtaining a working status of a first apparatus in a vehicle, wherein the working status comprises a cooling state and a heating state;
obtaining a temperature inside the vehicle; and
when the temperature inside the vehicle is greater than a first temperature threshold and the working status of the first apparatus is the cooling state, running a second apparatus in the vehicle to reduce the temperature inside the vehicle; or
when the temperature inside the vehicle is less than a second temperature threshold and the working status of the first apparatus is the heating state, running the second apparatus in the vehicle to increase the temperature inside the vehicle.

2. The method according to claim 1, wherein running the second apparatus in the vehicle to reduce the temperature inside the vehicle comprises:
when the second apparatus is not started, starting the second apparatus, and running the second apparatus based on a first temperature setpoint, to reduce the temperature inside the vehicle; or
when the second apparatus has been started, running the second apparatus based on a second temperature setpoint, to reduce the temperature inside the vehicle.

3. The method according to claim 1, wherein running the second apparatus in the vehicle to increase the temperature inside the vehicle comprises:
when the second apparatus is not started, starting the second apparatus, and running the second apparatus based on a third temperature setpoint, to increase the temperature inside the vehicle; or
when the second apparatus has been started, running the second apparatus based on a fourth temperature setpoint, to increase the temperature inside the vehicle.

4. The method according to claim 2 or 3, wherein the method further comprises:
stopping the second apparatus after preset duration.

5. The method according to claim 1 or 2, wherein after running the second apparatus in the vehicle to reduce the temperature inside the vehicle, the method further comprises:
when the temperature inside the vehicle is less than or equal to a third temperature threshold, automatically stopping the second apparatus, wherein the third temperature threshold is less than or equal to the first temperature threshold.

6. The method according to claim 1 or 3, wherein after running the second apparatus in the vehicle to increase the temperature inside the vehicle, the method further comprises:
when the temperature inside the vehicle is greater than or equal to a fourth temperature threshold, automatically stopping the second apparatus, wherein the fourth temperature threshold is greater than or equal to the second temperature threshold.

7. The method according to any one of claims 1 to 6, wherein the method further comprises:
when a state of charge of the vehicle is less than a preset state-of-charge threshold, stopping the first apparatus and/or the second apparatus.

8. The method according to claim 1, wherein when the temperature inside the vehicle is greater than the first temperature threshold or the temperature inside the vehicle is less than the second temperature threshold, the method further comprises:
prompting, in a preset manner, a user to adjust the temperature inside the vehicle by using the second apparatus.

9. The method according to any one of claims 1 to 8, wherein after running the second apparatus in the vehicle to reduce the temperature inside the vehicle, the method further comprises:
when the temperature inside the vehicle is less than or equal to the first temperature threshold, obtaining a temperature outside the vehicle; and
if the temperature outside the vehicle is less than or equal to the first temperature threshold, setting a status of the second apparatus to a fresh air mode.

10. The method according to any one of claims 1 to 8, wherein after running the second apparatus in the vehicle to increase the temperature inside the vehicle, the method further comprises:
when the temperature inside the vehicle is greater than or equal to the second temperature threshold, obtaining a temperature outside the vehicle; and
if the temperature outside the vehicle is greater than or equal to the second temperature threshold, setting a status of the second apparatus to a fresh air mode.

11. The method according to any one of claims 1 to 10, wherein before obtaining the working status of the first apparatus in the vehicle, the method further comprises:
receiving a first signal sent by a remote device, wherein the first signal indicates to start the first apparatus; and
starting the first apparatus based on a working status indicated by the first signal;
or
obtaining a working status used during previous running of the first apparatus; and
running the first apparatus based on the working status used during the previous running.

12. The method according to any one of claims 1 to 10, wherein the first apparatus is an automotive refrigerator, and the second apparatus is an automotive air conditioner.

13. A temperature control apparatus, comprising a processor and a memory, wherein the memory is coupled to the processor, the memory is configured to store computer-readable instructions, and when the processor reads the computer-readable instructions from the memory, the data collection apparatus is enabled to perform the method according to any one of claims 1 to 12.

14. A vehicle, wherein the vehicle comprises the temperature control apparatus according to claim 13.
